# FASCICULE DE BREVET EUROPEEN

(11) **EP 3 247 610 B1**
(45) Date de publication et mention de la délivrance du brevet: **13.03.2019**
(21) Numéro de dépôt: 16705567.2
(22) Date de dépôt: 20.01.2016
(51) Int. Cl.: B62B 3/04, B62B 3/10, B62H 3/08, B62H 3/12

(54) **CHARIOT POUR TRANSPORTER OU RANGER UNE BICYCLETTE**
WAGEN ZUM TRANSPORTIEREN ODER PARKEN EINES FAHRRADES
CART FOR TRANSPORTING OR STORING A BICYCLE

(30) Priorité: 20.01.2015 FR 1550447
(43) Date de publication de la demande: 29.11.2017
(73) Titulaire: LABADIS SAS, 53000 Laval (FR)
(72) Inventeur: LABADIE, Jean, 53970 Nuille sur Vicoin (FR)
(74) Mandataire: Santarelli
(86) Numéro de dépôt international: PCT/FR2016/050108
(87) Numéro de publication internationale: WO 2016/116701

(56) Documents cités:
- WO-A1-2013/120141
- WO-A1-2013/164503
- WO-A1-2014/118406
- AT-A1- 513 790
- US-A1- 2011 240 572

## Description

L'invention a trait aux dispositifs pour accueillir des charges tels que les chariots servant à déplacer des charges par exemple entre un site de fabrication et un entrepôt, entre un entrepôt et un lieu de vente ou entre un lieu de vente et un atelier de réparation. Le document WO 2014/118406 A1 montre un chariot selon les préambules des revendications 1 et 4.

L'invention vise à fournir un tel chariot pour accueillir une bicyclette, qui offre une grande commodité de chargement et de déchargement d'une bicyclette et, dans le cas où la bicyclette est transportée, une grande sécurité lors du transport. Cet objet est résolu par un chariot tel que défini dans les revendications 1 et 4.

L'invention propose à cet effet, sous un premier aspect, un chariot pour transporter une bicyclette, caractérisé en ce qu'il comporte :
- un plateau présentant une première face principale, une seconde face principale et des faces latérales s'étendant chacune entre un bord de la première face principale et un bord de la seconde face principale ;
- des roues, fixées au plateau du côté de la première face principale ;
- un mât fixé au plateau du côté de la seconde face principale, s'étendant transversalement au plateau entre une extrémité proximale et une extrémité distale, le mât délimitant un creux en forme de gouttière ;
- un crochet fixé à l'extrémité distale du mât, s'étendant du côté du creux du mât ; et
- un bloqueur comportant un plastron mobile suivant un trajet prédéterminé dans lequel le plastron se rapproche ou s'éloigne du mât, et comportant un organe pour résister à ce que le plastron s'éloigne du mât ;
lequel chariot est configuré pour maintenir une bicyclette entre le mât et le bloqueur, avec la bicyclette suspendue au crochet par sa roue avant, la roue arrière et la roue avant de la bicyclette engagées dans le creux du mât et le plastron en appui sur la selle de la bicyclette.

Pour décharger une bicyclette du chariot selon l'invention, il suffit d'éloigner le plastron de la selle de la bicyclette, en agissant à l'encontre de l'organe pour résister à ce que le plastron s'éloigne du mât, puis de saisir la bicyclette pour l'enlever du chariot en veillant à dégager la roue avant du crochet au début du mouvement d'enlèvement.

Pour charger une bicyclette dans le chariot selon l'invention, il suffit d'effectuer les manoeuvres inverses, c'est-à-dire d'engager le crochet avec la roue avant de la bicyclette et puis de rapprocher le plastron vers le mât jusqu'à ce qu'il soit en appui sur la selle de la bicyclette, le plastron conservant alors cette position grâce à l'organe pour résister à ce que le plastron s'éloigne du mât.

Ces manoeuvres sont particulièrement simples et commodes à effectuer.

En outre, le maintien de la bicyclette procuré tout à la fois par le mât qui reçoit les roues dans son creux et par le plastron qui empêche la selle de bouger, est particulièrement efficace contre les mouvements de la bicyclette vis-à-vis du reste du chariot. En particulier, la bicyclette ne peut pas osciller autour du crochet auquel elle est suspendue par sa roue avant, ou en tout cas les oscillations sont très limitées.

Ce maintien efficace de la bicyclette vis-à-vis du chariot permet de transporter la bicyclette dans les meilleures conditions.

On notera que l'invention est basée en partie sur l'observation que dans une bicyclette, il n'y a aucune partie plus haute que la selle en arrière de la selle ; et que par conséquent il est possible d'immobiliser la bicyclette en venant appuyer sur la selle depuis l'espace qui regarde la partie de la bicyclette située entre la selle et l'arrière.

Cela est mis en oeuvre dans le chariot selon l'invention par le bloqueur dont le plastron vient ainsi appuyer sur la selle.

Selon des caractéristiques avantageuses :
- l'extrémité proximale du mât est adjacente à un bord de la seconde face principale du plateau, le creux du mât est situé du côté opposé à ce bord, le chariot est configuré pour admettre une position nominale où le mât est debout tandis que le plateau est couché avec les roues au contact du sol, et pour admettre une position de chargement/déchargement où le plateau est debout tandis que le mât est couché le long du sol avec le creux qui regarde vers le haut, le passage entre la position nominale et la position de chargement/déchargement se faisant en basculant le chariot ; et/ou
- le chariot comporte, pour être attelé à un chariot semblable, un timon d'un premier côté et un crochet d'un second côté opposé au premier côté ; et de préférence ledit timon présente une fente centrale afin qu'il puisse coulisser vis-à-vis du crochet d'un chariot semblable.

L'invention vise également, sous un second aspect, un chariot pour ranger une bicyclette, caractérisé en ce qu'il comporte :
- un plateau ;
- des organes de guidage à basculement du plateau par rapport au sol, configurés pour que le chariot admette une position nominale où le plateau est couché et une position de chargement/déchargement où le plateau est debout ;
- un mât fixé au plateau, s'étendant transversalement au plateau entre une extrémité proximale et une extrémité distale, le mât délimitant un creux en forme de gouttière ;
- un crochet fixé à l'extrémité distale du mât, s'étendant du côté du creux du mât ; et
- un bloqueur comportant un plastron mobile suivant un trajet prédéterminé dans lequel le plastron se rapproche ou s'éloigne du mât, et comportant un organe pour résister à ce que le plastron s'éloigne du mât ;
lequel chariot est configuré pour maintenir une bicyclette entre le mât et le bloqueur, avec en position nominale la bicyclette suspendue au crochet par sa roue avant, la roue arrière et la roue avant de la bicyclette engagées dans le creux du mât et le plastron en appui sur la selle de la bicyclette.

Le chariot selon ce second aspect de l'invention n'est pas prévu pour transporter une bicyclette, mais pour ranger une bicyclette à un emplacement prédéterminé.

Par conséquent, le chariot selon le second aspect de l'invention comporte, plutôt que des roues, des organes de guidage à basculement du plateau par rapport au sol, configurés pour que le chariot admette une position nominale où le plateau est couché et une position de chargement/déchargement où le plateau est debout.

Bien que le chariot selon le second aspect de l'invention soit mobile par rapport au sol à basculement plutôt que sur roues, on retrouve les mêmes avantages que pour le chariot selon le premier aspect de l'invention.

On notera en particulier que la qualité du maintien de la bicyclette est avantageuse lors du basculement entre la position nominale et la position de chargement/déchargement ou vice-versa.

Selon des caractéristiques avantageuses du chariot selon le premier aspect de l'invention et du chariot selon le second aspect de l'invention :
- le plastron présente une largeur plus grande que la largeur d'une selle de bicyclette ;
- le plastron est en matière flexible et élastique ;
- le bloqueur est configuré pour que le plastron admette une position dégagée où il est à l'écart du mât et comporte un organe pour faire rester le plastron en position dégagée ;
- l'organe pour résister à ce que le plastron s'éloigne du mât est un organe élastique sollicitant le plastron à se rapprocher du mât ;
- le bloqueur est configuré pour que l'organe élastique sollicite le plastron à se rapprocher du mât entre une position la plus proche du mât et une position intermédiaire ; et pour que l'organe élastique sollicite le plastron à s'éloigner du mât entre la position intermédiaire et une position la plus éloignée du mât ;
- l'organe élastique est un bras à longueur variable tendant à prendre une longueur maximale ; le bloqueur comporte un cadre portant le plastron, une articulation entre le cadre et le plateau, une articulation entre une extrémité du bras à longueur variable et le plateau, et une articulation entre l'autre extrémité du bras à longueur variable et le cadre ; et dans la position intermédiaire du plastron ces trois articulations sont alignées ;
- le bloqueur comporte un cadre portant le plastron, lequel cadre comporte deux longerons chacun articulé au plateau ;
- ledit mât comporte une paroi de fond à section en V et des ailes latérales à section droite, chaque aile latérale longeant l'une des extrémités de la paroi de fond ;
- ledit crochet comporte une âme centrale et des garnitures prenant en sandwich une patte courbée que comporte l'âme centrale, les garnitures étant en débord de la patte courbée du côté concave de celle-ci ;
- ledit crochet est incliné vis-à-vis du mât et à orientation fixe ; et/ou
- ledit plateau est formé par une plaque métallique massive.

L'exposé de l'invention sera maintenant poursuivi par la description détaillée d'exemples de réalisation, donnée ci-après à titre illustratif et non limitatif, en référence aux dessins annexés. Sur ceux-ci :
- la figure 1 est une vue en perspective d'un chariot pour transporter une bicyclette, ce chariot étant conforme à l'invention ;
- la figure 2 est une vue semblable à la figure 1 mais avec une bicyclette maintenue dans ce chariot ;
- la figure 3 est une vue semblable à la figure 2 mais avec le chariot dans lequel est maintenu la bicyclette qui est en cours de basculement entre la position nominale montrée sur la figure 2 et une position de chargement/déchargement ;
- la figure 4 est une vue semblable aux figures 2 et 3 mais avec le chariot qui est dans la position de chargement/déchargement ;
- la figure 5 est une vue semblable à la figure 4 mais avec le bloqueur qui est en position dégagée où son plastron est à l'écart de la bicyclette ;
- la figure 6 est une vue semblable à la figure 5 mais avec la bicyclette qui a été enlevée du chariot ;
- la figure 7 est une vue en élévation montrant le dessous du chariot en position de chargement/déchargement (figures 4 à 6), et montrant également le sol ;
- la figure 8 est un agrandissement de la partie supérieure des figures 5 et 6 sur laquelle on voit bien le bloqueur, en position dégagée ;
- la figure 9 est un agrandissement de la partie droite de la figure 6, sur laquelle on voit bien le crochet fixé à l'extrémité distale du mât ;
- la figure 10 est une vue semblable à la figure 2 mais avec une bicyclette différente maintenue dans le chariot ; et
- la figure 11 montre le chariot de la figure 2 et le chariot de la figure 10 attelés l'un à l'autre.

Le chariot 10 illustré sur les dessins comporte un plateau 11, un premier couple 12 de roues 13, un deuxième couple 14 de roues 15, un mât 16, un crochet 17 et un bloqueur 18.

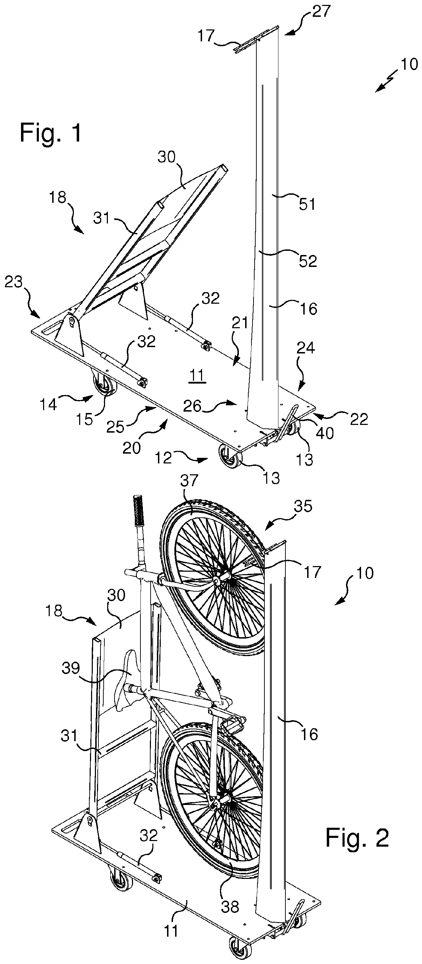

Le plateau 11 présente une première face principale 20, qui est en regard du sol dans la position nominale du chariot (figures 1 et 2) et une seconde face principale 21 située du côté opposé à la première face principale 20, c'est-à-dire que la seconde face principale 21 regarde vers le haut dans la position nominale du chariot (figures 1 et 2).

Le plateau 11 présente des faces latérales 22 à 25 qui s'étendent chacune entre un bord de la première face principale 20 et un bord de la seconde face principale 21.

Ici, le plateau 11 a un contour rectangulaire. Une première face latérale 22 et une deuxième face latérale 23 correspondent aux petits côtés du contour rectangulaire. Une troisième face latérale 24 et une quatrième face latérale 25 correspondent aux grands côtés du contour rectangulaire.

Les roues 13 et 15 sont fixées au plateau 11 du côté de la première face principale 20.

Le mât 16 est fixé au plateau 11 du côté de la seconde face principale 21. Le mât 16 s'étend transversalement au plateau 11 entre une extrémité proximale 26 et une extrémité distale 27.

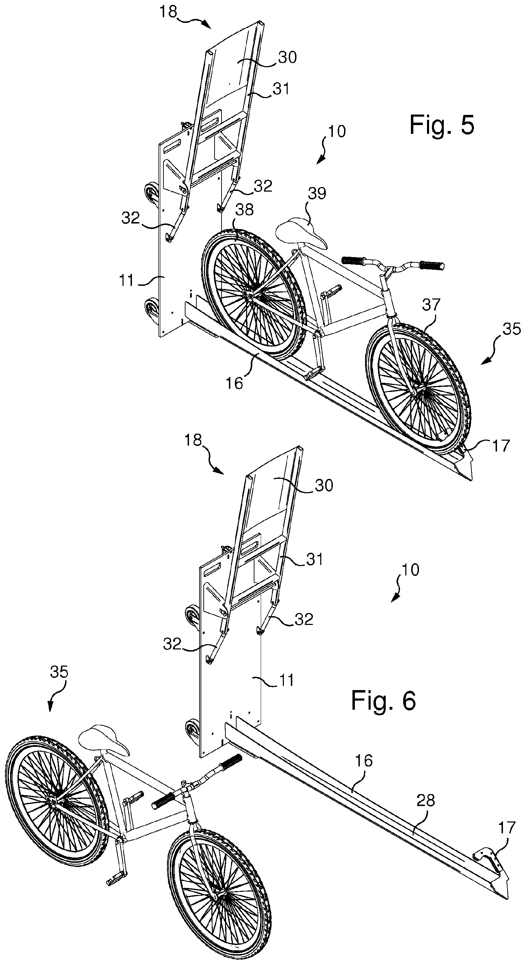

Comme on le voit bien sur la figure 6, le mât 16 délimite un creux 28 en forme de gouttière.

L'extrémité proximale 26 du mât 16 est ici adjacente à un bord de la seconde face principale 21, en l'occurrence le bord situé le long de la première face latérale 22.

Le creux 28 du mât 16 est du côté opposé au bord qui longe la première face latérale 22.

Ainsi, le creux 28 est tourné vers l'extrémité du chariot 10 qui est opposée à l'extrémité à laquelle se trouve le mât 16.

Le crochet 17 est fixé à l'extrémité distale du mât 16. Le crochet 17 s'étend du côté du creux 28 du mât 16.

Le bloqueur 18 comporte un plastron 30, un cadre 31 portant le plastron 30 et des vérins élastiques 32 pour solliciter le cadre 31.

Le cadre 31 est articulé vis-à-vis du plateau 11. Chacun des vérins élastiques 32 est articulé à la fois vis-à-vis du plateau 11 et vis-à-vis du cadre 31.

Le plastron 30 est mobile suivant un trajet prédéterminé entre une position la plus proche du mât montrée sur la figure 1 et une position la plus éloignée du mât montrée sur les figures 5 et 6.

Du fait que le plastron 30 est porté par le cadre 31 articulé vis-à-vis du plateau 11, ce trajet est ici en arc de cercle.

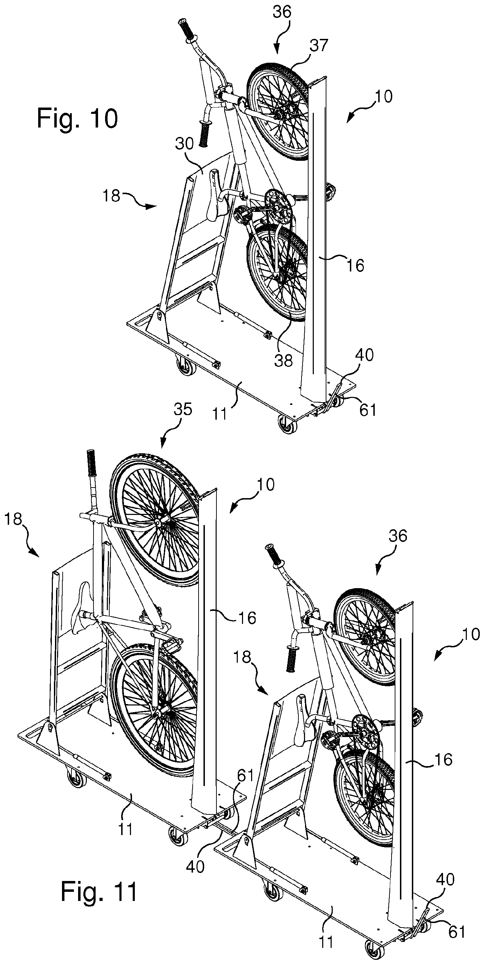

Le chariot 10 est configuré pour maintenir entre le mât 16 et le bloqueur 18 une bicyclette, telle que la bicyclette 35 montrée sur les figures 2 à 6 ou la bicyclette 36 montrée sur la figure 10.

La bicyclette ainsi maintenue est suspendue au crochet 17 par sa roue avant 37. Le plastron 30 est en appui sur la selle 39. La roue avant 37 et la roue arrière 38 sont engagées dans le creux 28 du mât 16.

Le chariot 10 maintient ainsi la bicyclette telle que 35 ou 36 lorsqu'il est en position nominale (figures 1, 2, 10 et 11) où il est à même de transporter la bicyclette d'un lieu à un autre, avec en particulier les roues 13 et 15 qui sont au contact du sol.

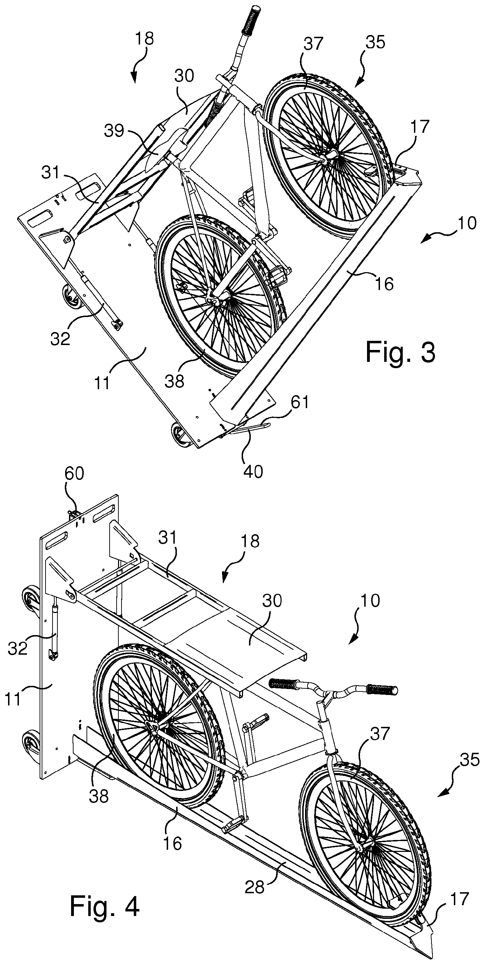

Dans l'exemple illustré, le chariot 10 est configuré pour admettre, en outre de la position nominale, une position de chargement/déchargement (figures 4 à 7) où la mise en place de la bicyclette dans le chariot ainsi que le retrait de la bicyclette hors du chariot sont plus aisés que dans la position nominale.

Alors que dans la position nominale (figures 1, 2, 10 et 11) le mât 16 est debout tandis que le plateau 11 est couché avec les roues 13 et 15 au contact du sol, dans la position de chargement/déchargement, le plateau 11 est debout tandis que le mât 16 est couché le long du sol avec le creux 28 qui regarde vers le haut.

Ainsi que montré sur les figures 2 à 4, pour passer de la position nominale à la position de chargement/déchargement, on fait basculer le chariot 10 d'un quart de tour.

On peut par exemple bloquer les roues 13 du couple 12 situées du même côté que le mât 16 et saisir avec une main le haut du mât 16 pour amorcer le mouvement de basculement puis accompagner ce mouvement en saisissant à un certain moment la bicyclette en place dans le chariot 10, ou le bloqueur 18, ou le plateau 11 pour contrôler le mouvement de basculement, en particulier pour retenir le chariot 10 lorsque le mât 16 se rapproche du sol.

Pour libérer la bicyclette telle que 35 ou 36 lorsque le chariot 10 est dans la position de chargement/déchargement, on saisit le plastron 30 ou le cadre 31 pour éloigner le plastron 30 de la bicyclette jusqu'à ce que le plastron 30 se place dans la position dégagée, c'est-à-dire la position où il est le plus éloigné du mât 16. On est alors dans la position illustrée sur la figure 5.

Ainsi qu'expliqué ultérieurement, les vérins élastiques 32 font rester le plastron 30 dans la position dégagée.

On peut alors saisir la bicyclette pour la placer hors du chariot 10, ainsi que montré sur la figure 6.

Pour mettre en place une bicyclette dans le chariot 10, on procède de façon semblable mais en sens inverse, c'est-à-dire que l'on saisit la bicyclette pour placer ses roues dans le creux 28 du mât 16 tout en veillant à ce que le crochet 17 s'engage avec la roue avant 37, on agit sur le plastron 30 ou le cadre 31 pour rapprocher le plastron 30 du mât 16, les vérins élastiques 32 sollicitent alors le cadre 31 pour que le plastron 30 vienne en appui sur la selle 39, et on fait basculer le chariot 10 pour le ramener en position nominale.

On observera que les différents mouvements à accomplir pour charger ou décharger une bicyclette sont chacun simple et commode à accomplir, y compris dans le cas d'une bicyclette lourde (par exemple une bicyclette à assistance électrique).

Au cours du basculement, du fait que la bicyclette passe d'une position horizontale à une position verticale, il descend légèrement par rapport au mât 16 jusqu'à être suspendu au crochet 17.

Ainsi qu'expliqué ultérieurement, l'agencement du crochet 17 est tel que lorsque la bicyclette est suspendue au crochet 17, la roue avant 37 a tendance à pénétrer dans le creux 28 du mât 16.

L'effort exercé par le plastron 30 sur la selle 39 du fait des vérins élastiques 32 sollicite la roue arrière 38 à s'enfoncer dans le creux 28 du mât 16.

D'une façon générale, lorsqu'une bicyclette telle que la bicyclette 35 ou la bicyclette 36 est maintenue dans le chariot 10, le plan médian du creux 28 du mât 16 et le plan médian de la bicyclette sont alignés.

Le plastron 30 présente une largeur, c'est-à-dire une dimension orientée transversalement au plan médian du creux du mât, qui est plus grande que la largeur d'une selle de bicyclette telle que la selle 39 de la bicyclette 35 ou de la bicyclette 36, la largeur de la selle étant sa dimension orientée transversalement au plan médian de la bicyclette.

Le cadre 31 est rigide et le plastron 30 est en matière flexible et élastique. Ici, le plastron 30 est fait dans une feuille de matière élastomère.

Du fait que le plastron 30 est plus large que la selle telle que 39 et qu'il est en matière flexible et élastique, et du fait que le plastron 30 est maintenu en appui sur la selle par les vérins élastiques 32, le plastron 30 enveloppe étroitement la selle de sorte que la selle ne peut glisser vis-à-vis du plastron 30 que si des efforts très élevés sont exercés.

Du fait que le cadre 31 qui porte le plastron 30 est rigide et du fait que le seul mouvement que peut effectuer le cadre 31 est un mouvement de pivotement vis-à-vis du plateau 11 autour d'une direction orientée transversalement au plan médian du creux du mât, le plastron 30 empêche ou en tout cas limite fortement les mouvements de la selle suivant une direction transversale au plan médian de la bicyclette.

Etant donné par ailleurs que les roues de la bicyclette sont enfoncées dans le creux 28 du mât 16, et que ces roues sont donc bien maintenues par le mât 16, la bicyclette telle que 35 ou 36 ne peut pas osciller autour du crochet 17, ou en tout cas ne peut osciller que très modérément.

Par conséquent, le transport de la bicyclette peut s'opérer dans d'excellentes conditions.

Dans l'exemple illustré, le mât 16 a une longueur de 1,90 m. D'une façon générale, pour que le chariot puisse convenir aux bicyclettes courantes, il est avantageux que le mât ait une longueur comprise entre 1,75 m et 1,95 m.

Dans l'exemple illustré, le plastron a une largeur de 35 cm. D'une façon générale, il est avantageux que le plastron ait une largeur comprise entre 25 cm et 40 cm.

D'une façon générale, vu les dimensions que l'on rencontre en pratique pour les bicyclettes courantes, il est avantageux que le plastron soit en mesure de venir en appui sur une selle de bicyclette qui se trouve à une distance comprise entre 50 cm et 80 cm du mât ; et à une distance du plateau comprise entre 50 cm et 1,20 m.

On observera que le chariot 10 est en mesure de maintenir une bicyclette sans aucun élément latéral à la bicyclette, c'est-à-dire situé à gauche ou à droite de celle-ci, si ce n'est le mât 16 au voisinage des pneus et le bloqueur 18 au voisinage de la selle.

Ainsi, le chariot 10, y compris lorsqu'il est chargé par une bicyclette, peut être particulièrement étroit, en ayant par exemple une largeur de 40 cm.

Par ailleurs, du fait de l'absence dans le chariot 10 d'élément latéral à la bicyclette (si ce n'est au niveau des pneus et de la selle), il est possible d'observer la bicyclette alors qu'elle est maintenue par le chariot 10. Cela est utile par exemple lorsque la bicyclette telle que 35 ou 36 est amenée à un atelier de réparation où doit être effectué un diagnostic. En effet, le diagnostic pourra être effectué le plus souvent sans décharger la bicyclette, et le chariot chargé avec la bicyclette pourra ensuite être conduit à une zone d'attente.

Ainsi que montré sur la figure 11, le transport peut s'effectuer avec le chariot 10 qui est attelé à un chariot semblable. Ainsi qu'expliqué plus en détail ultérieurement, pour permettre l'attelage du chariot 10 avec un chariot semblable, il est prévu un timon 40 qui adopte au repos une position relevée où il est partiellement en regard de la face latérale 22 du plateau 11.

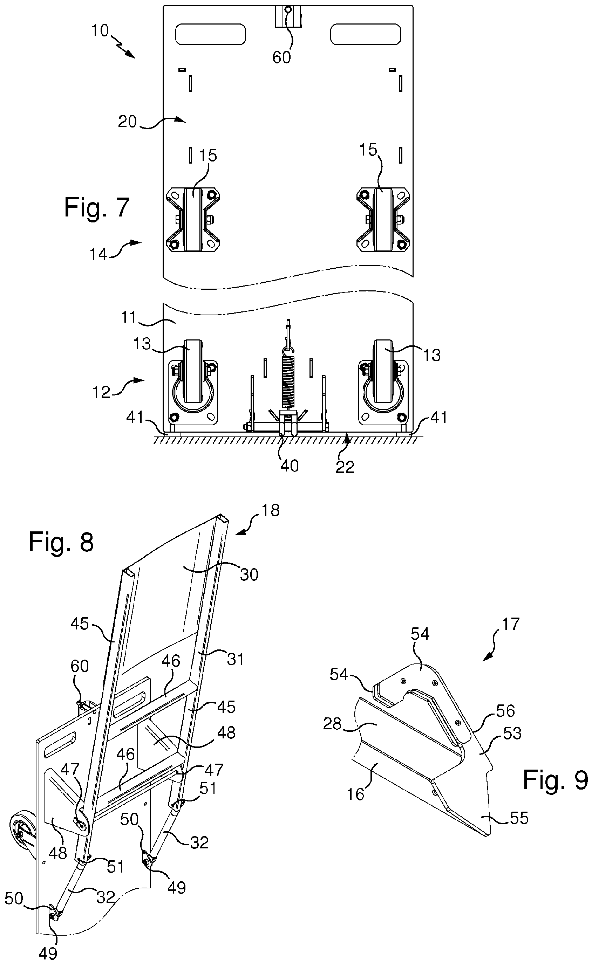

Ainsi que montré sur la figure 7, pour éviter que le plateau 11 soit en contact avec le sol par l'intermédiaire du timon 40 (ce qui ne serait pas favorable à la stabilité du chariot 10 dans la position de chargement/déchargement), il est prévu sur la face 22 des tétons 41 saillant au moins autant que le timon 40, afin que le contact avec le sol se fasse par les tétons 41, lesquels sont relativement éloignés l'un de l'autre.

On notera que, pour simplifier les dessins, les tétons 41 sont illustrés uniquement sur la figure 7.

On va maintenant décrire plus en détail le bloqueur 18 à l'appui de la figure 8.

Le cadre 31 est ici formé par deux longerons 45 et par deux traverses 46.

Le plastron 30 s'étend entre les deux longerons 45 dans une zone située entre une extrémité des longerons 45 et les traverses 46.

De chaque côté du cadre 31, le longeron 45 et le vérin élastique 32 sont agencés de façon semblable. Dans ce qui suit, on décrit l'agencement et le fonctionnement d'un côté mais il est entendu que cette description vaut également pour l'autre côté.

Le longeron 45 est articulé vis-à-vis du plateau 11 grâce à une articulation 47 portée par une console 48.

Le vérin élastique 32 est articulé vis-à-vis du plateau 11 grâce à une articulation 49 portée par une console 50.

Le vérin élastique 32 est articulé vis-à-vis du longeron 45 grâce à une articulation 51.

Le vérin élastique 32 est un bras à longueur variable tendant à prendre une longueur maximale.

Lorsque les articulations 47, 49 et 51 sont alignées, la longueur du vérin élastique 32 est minimale. Le plastron 30 est alors dans une position intermédiaire entre la position la plus proche du mât 16 (figure 1) et la position la plus éloignée du mât 16 (position dégagée, figures 5, 6 et 8).

Lorsque l'articulation 51 est, par rapport à une ligne imaginaire joignant les articulations 47 et 49, du côté du plateau 11, le vérin élastique 32 tend à faire tourner le cadre 31 dans le sens où le plastron 30 se rapproche du mât 16.

Lorsque l'articulation 51 est, par rapport à une ligne imaginaire joignant les articulations 47 et 49, du côté qui est opposé au plateau 11, le vérin élastique 32 tend à faire tourner le cadre 31 dans le sens où le plastron 30 s'éloigne du mât 16.

Ainsi, le bloqueur 18 est configuré pour que le vérin élastique 32 sollicite le plastron 30 à se rapprocher du mât 16 entre la position la plus proche du mât 16 et la position intermédiaire ; et pour que le vérin élastique 32 sollicite le plastron 30 à s'éloigner du mât 16 entre la position intermédiaire et la position la plus éloignée du mât 16 (position dégagée).

Le mât 16 comporte une paroi de fond 51 (figure 1) à section en V et des ailes latérales 52 (figure 1) à section droite. Chaque aile latérale 52 longe l'une des extrémités de la paroi de fond 51. Les deux ailes latérales 52 sont sensiblement parallèles l'une à l'autre.

L'ouverture du creux 28 du mât 16 se trouve entre les ailes latérales 52.

Ainsi, le creux 28 du mât 16 présente d'abord une partie à largeur constante, située entre les ailes latérales 52 puis une partie à largeur diminuant progressivement, délimitée par la paroi de fond 51.

Ici, les ailes latérales 52 ont une largeur qui est plus grande au niveau de l'extrémité proximale 26 qu'au niveau de l'extrémité distale 27 du mât 16.

D'une façon générale, le mât 16 est centré latéralement vis-à-vis du plateau 11, c'est-à-dire que le mât 16 est à égale distance du bord correspondant à la face latérale 24 et du bord correspondant à la face latérale 25.

Le plan médian du creux 28 est orienté parallèlement aux grands côtés du contour rectangulaire du plateau 11.

Le plateau 11 et le mât 16 sont ici en matière métallique, en l'occurrence en acier. Ils sont soudés l'un à l'autre.

Le plateau 11 est plus précisément une plaque métallique massive, grâce à quoi le plateau 11 peut jouer le rôle de lest abaissant le centre de gravité du chariot 10, au bénéfice de sa stabilité.

Le crochet 17 comporte une âme centrale rigide 53 fixée à l'extrémité distale 27 du mât 16. Ici, l'âme 53 est en acier et est fixée au mât 16 par soudure.

En outre de l'âme 53, le crochet 17 comporte deux garnitures 54 en matière rigide mais moins dure que celle de l'âme 53. Ici, les garnitures 54 sont en matière plastique.

L'âme 53, qui est ici formée d'une seule pièce, comporte une base 55 et une patte courbée 56.

La base 55 a un contour correspondant à celui de la tranche du mât 16 à son extrémité distale 27, étant ici précisé que cette tranche est inclinée par rapport à la direction générale du mât 16.

La base 55 est soudée au mât 16 tout au long de sa tranche.

La patte courbée 56 prend racine latéralement à la base 55.

A partir de sa racine, la patte courbée 56 comporte une portion s'étendant suivant la direction du mât 16 puis une portion s'étendant transversalement à la direction du mât 16.

Les garnitures 54 prennent en sandwich la patte courbée 56. Elles ont la même forme que cette dernière mais légèrement plus larges, de sorte que les garnitures 54 sont en débord de la patte courbée 56 du côté concave de celle-ci.

Le contact entre la roue avant de la bicyclette telle que 35 ou 36 et le crochet 17 est prévu pour être fait par les portions en débord des garnitures 54.

L'agencement du crochet 17 permet tout à la fois d'éviter de blesser la roue de la bicyclette puisque le contact s'effectue par une matière qui n'est pas extrêmement dure et de bénéficier de la solidité procurée par l'âme 53.

Le crochet 17 est agencé pour que la zone de contact avec la roue de la bicyclette soit suffisamment éloignée du mât 16 pour permettre un engagement aisé du crochet avec la roue et suffisamment proche pour qu'il existe un bras de levier entre le point de contact et le moyeu de la roue de sorte qu'il existe un couple tendant à faire pénétrer la roue dans le creux 28 du mât 16 lorsque la bicyclette est suspendue au crochet 17.

On observera que la partie du crochet 17 s'engageant avec la roue de la bicyclette, c'est-à-dire la patte courbée 56, recouverte des garnitures 54, a une épaisseur particulièrement faible ; et qu'au surplus, du fait de son inclinaison, a une orientation semblable à celle des rayons de la roue.

On notera que, de manière générale, le rayonnage des roues de bicyclette est ainsi fait que tous les quatre rayons, on dispose d'un interstice assez large entre deux rayons sensiblement parallèles. Il est commode d'insérer le crochet 17 dans un tel interstice.

Le crochet 17 peut ainsi coopérer dans les meilleures conditions avec la roue de la bicyclette.

On observera que le crochet 17 est à orientation fixe vis-à-vis du mât 16. Cela offre l'avantage, par rapport à un crochet articulé, d'éviter que le crochet se rabatte contre le mât lorsque le chariot 10 est en position de chargement/déchargement, ce qui nécessiterait qu'il soit relevé par l'utilisateur pour être engagé dans la roue de la bicyclette.

Ainsi qu'indiqué ci-dessus et comme montré sur la figure 11, le chariot 10 est prévu pour être attelé à un chariot muni d'un système d'attelage semblable, par exemple un autre chariot 10.

Ce système d'attelage comporte, d'un côté du chariot 10, le timon 40. Du côté opposé au côté où se trouve le timon 40, le chariot 10 comporte un crochet 60.

Le timon 40 présente une fente centrale 61 configurée pour recevoir un doigt du crochet 60.

Ainsi, lorsqu'un crochet tel que le crochet 60 est engagé dans la fente 61 du timon 40, le timon et le crochet peuvent coulisser l'un par rapport à l'autre.

L'attelage ainsi formé admet une position rétractée dans laquelle les deux chariots attelés l'un à l'autre sont rapprochés et une position déployée dans laquelle les deux chariots attelés l'un à l'autre sont éloignés.

Pour plus de détail sur le système d'attelage que comporte le chariot 10, on pourra se reporter à la demande de brevet français 2 800 676.

Pour permettre au chariot 10 d'être aisément remorqué en tirant sur le timon 40, les roues 13 du premier couple 12 (situé du même côté que le timon 40) sont librement orientables et les roues 15 du deuxième couple 14 (situé du même côté que le crochet 60) sont à orientation fixe suivant la direction de déplacement prévue pour le chariot 10, c'est-à-dire ici l'orientation des grands côtés du contour rectangulaire du plateau 11.

Dans une variante non illustrée, plutôt que de servir à transporter une bicyclette, le chariot sert à ranger une bicyclette à un emplacement prédéterminé.

Dans cette variante, plutôt que des roues telles que les roues 13 et 15, le chariot comporte des organes de guidage à basculement du plateau tel que 11 par rapport au sol, configurés pour que le chariot admette une position nominale où le plateau tel que 11 est couché et une position de chargement/déchargement où le plateau tel que 11 est debout.

Bien entendu, c'est dans la position nominale que la bicyclette est rangée.

Les organes de guidage à basculement par rapport au sol sont par exemple configurés pour que le plateau, et plus généralement le chariot, pivote autour d'une direction orientée comme la face latérale 22 et située à proximité de cette face latérale, de sorte que le chariot selon cette variante bascule entre la position nominale et la position de chargement/déchargement comme le chariot 10 de la façon montrée sur les figures 2 à 4.

Les organes de montage à basculement sont par exemple mis en oeuvre grâce à des charnières entre le plateau tel que 11 et un plancher posé sur le sol.

Ce plancher est par exemple associé à des joues entre lesquelles vient le chariot en position nominale. Pour fermer l'espace de rangement de la bicyclette, un panneau peut être prévu entre les joues à l'arrière (côté où se trouve le bloqueur 18 en position nominale) et sur le dessus tandis qu'à l'avant (côté où se trouve le mât 16) un panneau est associé au chariot.

Dans cette variante, le plateau tel que 11 peut être agencé différemment d'une plaque ayant deux faces principales, par exemple agencé en forme de poutre en U dont le segment central est du côté du mât tel que 16.

Dans des variantes non illustrées :
- le nombre de vérins élastiques tels que 32 est différent de deux, par exemple un seul ou quatre ;
- les vérins élastiques sont remplacés par un autre type de bras élastique à longueur variable, par exemple un ressort entourant une tige de guidage ;
- la section du mât est différente, par exemple en U ;
- le mât est éloigné des bords du plateau ;
- les vérins élastiques tels que 32 sont remplacés par d'autres organes pour résister à ce que le plastron s'éloigne du mât en position chargée avec une bicyclette, par exemple des organes à cliquet pour permettre au plastron de venir en appui sur la selle d'une bicyclette et pour lui interdire de s'en éloigner ; et de même pour faire rester le plastron en position dégagée, par exemple en prévoyant deux systèmes à cliquet (un pour chaque sens de déplacement) entre lesquels on permute ;
- le plateau est différent d'une plaque métallique massive, par exemple une structure ajourée en métal perforé ou en treillis de fils métalliques associée le cas échéant à un lest économique, par exemple un bloc de ciment ;
- le plastron est agencé différemment, par exemple en étant moins large ; et/ou
- le chariot comporte plusieurs mâts et autant de bloqueurs sur un même chariot, afin d'accueillir plusieurs bicyclettes.

De nombreuses autres variantes sont possibles en fonction des circonstances, et l'on rappelle à cet égard que l'invention ne se limite pas aux exemples décrits et représentés.

## Revendications

1. Chariot pour transporter une bicyclette (35, 36), comportant :
- un plateau (11) présentant une première face principale (20), une seconde face principale (21) et des faces latérales (22 - 25) s'étendant chacune entre un bord de la première face principale (20) et un bord de la seconde face principale (21) ;
- des roues (13, 15), fixées au plateau (11) du côté de la première face principale (20) ;
- un mât (16) fixé au plateau (11) du côté de la seconde face principale (21), s'étendant transversalement au plateau (11) entre une extrémité proximale (26) et une extrémité distale (27) ; et
- un crochet (17) fixé à l'extrémité distale (27) du mât (16) ;
**caractérisé en ce que** le mât (16) délimite un creux (28) en forme de gouttière ; le crochet (17) s'étend du côté du creux (28) du mât (16) ; et ledit chariot (10) :
- comporte un bloqueur (18) comportant un plastron (30) mobile suivant un trajet prédéterminé dans lequel le plastron se rapproche ou s'éloigne du mât (16), et comportant un organe (32) pour résister à ce que le plastron (30) s'éloigne du mât (16) ; et
- est configuré pour maintenir une bicyclette (35, 36) entre le mât (16) et le bloqueur (18), avec la bicyclette (35, 36) suspendue au crochet (17) par sa roue avant (37), la roue arrière (38) et la roue avant (37) de la bicyclette (35, 36) engagées dans le creux (28) du mât (16) et le plastron (30) en appui sur la selle (39) de la bicyclette (35, 36).

2. Chariot selon la revendication 1, **caractérisé en ce que** l'extrémité proximale (26) du mât (16) est adjacente à un bord de la seconde face principale (21) du plateau (11), le creux (28) du mât (16) est situé du côté opposé à ce bord, le chariot (10) est configuré pour admettre une position nominale où le mât (16) est debout tandis que le plateau (11) est couché avec les roues (13, 15) au contact du sol, et pour admettre une position de chargement/déchargement où le plateau (11) est debout tandis que le mât (16) est couché le long du sol avec le creux (28) qui regarde vers le haut, le passage entre la position nominale et la position de chargement/déchargement se faisant en basculant le chariot (10).

3. Chariot selon l'un quelconque des revendications 1 ou 2, **caractérisé en ce qu'**il comporte, pour être attelé à un chariot semblable, un timon (40) d'un premier côté et un crochet (60) d'un second côté opposé au premier côté.

4. Chariot pour ranger une bicyclette (35, 36), comportant :
- un plateau (11) ;
- des organes de guidage à basculement du plateau (11) par rapport au sol, configurés pour que le chariot admette une position nominale où le plateau est couché et une position de chargement/déchargement où le plateau est debout ;
- un mât (16) fixé au plateau (11), s'étendant transversalement au plateau (11) entre une extrémité proximale (26) et une extrémité distale (27) ; et
- un crochet (17) fixé à l'extrémité distale (27) du mât (16) ;
**caractérisé en ce que** le mât (16) délimite un creux (28) en forme de gouttière ; le crochet (17) s'étend du côté du creux (28) du mât (16) ; et ledit chariot (10) :
- comporte un bloqueur (18) comportant un plastron (30) mobile suivant un trajet prédéterminé dans lequel le plastron se rapproche ou s'éloigne du mât (16), et comportant un organe (32) pour résister à ce que le plastron (30) s'éloigne du mât (16) ; et
- est configuré pour maintenir une bicyclette (35, 36) entre le mât (16) et le bloqueur (18), avec en position nominale la bicyclette (35, 36) suspendue au crochet (17) par sa roue avant (37), la roue arrière (38) et la roue avant (37) de la bicyclette (35, 36) engagées dans le creux (28) du mât (16) et le plastron (30) en appui sur la selle (39) de la bicyclette (35, 36).

5. Chariot selon l'une quelconque des revendications 1 à 4, **caractérisé en ce que** le plastron (30) présente une largeur plus grande que la largeur d'une selle (39) de bicyclette (35, 36).

6. Chariot selon l'une quelconque des revendications 1 à 5, **caractérisé en ce que** le plastron (30) est en matière flexible et élastique.

7. Chariot selon l'une quelconque des revendications 1 à 6, **caractérisé en ce que** le bloqueur (18) est configuré pour que le plastron (30) admette une position dégagée où il est à l'écart du mât (16) et comporte un organe (32) pour faire rester le plastron (30) en position dégagée.

8. Chariot selon l'une quelconque des revendications 1 à 7, **caractérisé en ce que** l'organe pour résister à ce que le plastron (30) s'éloigne du mât (16) est un organe élastique (32) sollicitant le plastron (30) à se rapprocher du mât (16).

9. Chariot selon la revendication 8, **caractérisé en ce que** le bloqueur (18) est configuré pour que l'organe élastique (32) sollicite le plastron (30) à se rapprocher du mât (16) entre une position la plus proche du mât (16) et une position intermédiaire ; et pour que l'organe élastique (32) sollicite le plastron (30) à s'éloigner du mât (16) entre la position intermédiaire et une position la plus éloignée du mât (16).

10. Chariot selon la revendication 9, **caractérisé en ce que** l'organe élastique est un bras (32) à longueur variable tendant à prendre une longueur maximale ; le bloqueur (18) comporte un cadre (31) portant le plastron (30), une articulation entre le cadre (31) et le plateau (11), une articulation entre une extrémité du bras (32) à longueur variable et le plateau (11), et une articulation entre l'autre extrémité du bras (32) à longueur variable et le cadre (31) ; et dans la position intermédiaire du plastron (30) ces trois articulations sont alignées.

11. Chariot selon l'une quelconque des revendications 1 à 10, **caractérisé en ce que** le bloqueur (18) comporte un cadre (31) portant le plastron (30), lequel cadre (31) comporte deux longerons (45) chacun articulé au plateau (11).

12. Chariot selon l'une quelconque des revendications 1 à 11, **caractérisé en ce que** ledit mât (16) comporte une paroi de fond (51) à section en V et des ailes latérales (52) à section droite, chaque aile latérale (52) longeant l'une des extrémités de la paroi de fond (51).

13. Chariot selon l'une quelconque des revendications 1 à 12, **caractérisé en ce que** ledit crochet (17) comporte une âme centrale (53) et des garnitures (54) prenant en sandwich une patte courbée (56) que comporte l'âme centrale (53), les garnitures (54) étant en débord de la patte courbée (56) du côté concave de celle-ci.

14. Chariot selon l'une quelconque des revendications 1 à 13, **caractérisé en ce que** ledit crochet (17) est incliné vis-à-vis du mât (16) et à orientation fixe.

15. Chariot selon l'une quelconque des revendications 1 à 14, **caractérisé en ce que** ledit plateau (11) est formé par une plaque métallique massive.

## Patentansprüche

1. Wagen zum Transportieren eines Fahrrads (35, 36), mit:
- einer Platte (11), die eine erste Hauptfläche (20), eine zweite Hauptfläche (21) und Seitenflächen (22-25) aufweist, die sich jede zwischen einem Rand der ersten Hauptfläche (20) und einem Rand der zweiten Hauptfläche (21) erstrecken;
- Rädern (13, 15), die an der Platte (11) auf der Seite der ersten Hauptfläche (20) befestigt sind;
- einem Mast (16), der an der Platte (11) auf der Seite der zweiten Hauptfläche (21) befestigt ist und sich quer zu der Platte (11) zwischen einem proximalen Ende (26) und einem distalen Ende (27) erstreckt; und
- einem Haken (17), der an dem distalen Ende (27) des Mastes (16) befestigt ist;
**dadurch gekennzeichnet, dass** der Mast (16) eine Vertiefung (28) in Form einer Rinne begrenzt; wobei sich der Haken (17) von der Seite der Vertiefung (28) des Mastes (16) erstreckt; und der Wagen (10):
- einen Feststeller (18) aufweist mit einer Auflage (30), die entlang einer vorherbestimmten Bahn beweglich ist, in der sich die Auflage an den Mast (16) annähert oder von ihm beabstandet, und mit einem Organ (32), um sich dem Beabstanden der Auflage (30) von dem Mast (16) zu widersetzen; und
- ausgestaltet ist, um ein Fahrrad (35, 36) zwischen dem Mast (16) und dem Feststeller (18) zu halten, wobei das Fahrrad (35, 36) an dem Haken (17) über sein Vorderrad (37) aufgehängt ist, wobei das Hinterrad (38) und das Vorderrad (37) des Fahrrads (35, 36) in der Vertiefung (28) des Mastes (16) im Eingriff sind und sich die Auflage (30) auf dem Sattel (39) des Fahrrads (35, 36) abstützt.

2. Wagen nach Anspruch 1, **dadurch gekennzeichnet, dass** das proximale Ende (26) des Mastes (16) an einen Rand der zweiten Hauptfläche (21) der Platte (11) angrenzt, die Vertiefung (28) des Mastes (16) auf der diesem Rand gegenüberliegenden Seite gelegen ist, der Wagen (10) ausgestaltet ist, um eine nominale Position einzunehmen, wo der Mast (16) aufrecht steht, während die Platte (11) liegt, wobei die Räder (13, 15) mit dem Boden in Kontakt sind, und um eine Be-/Entladeposition einzunehmen, wo die Platte (11) aufrecht steht, während der Mast (16) längs des Bodens liegt, wobei die Vertiefung (28) nach oben weist, wobei der Übergang zwischen der nominalen Position und der Be-/Entladeposition durch Schwenken des Wagen (10) erfolgt.

3. Wagen nach einem der Ansprüche 1 oder 2, **dadurch gekennzeichnet, dass** er, um an einem ähnlichen Wagen angekoppelt zu werden, eine Deichsel (40) auf einer ersten Seite und einen Haken (60) auf einer zweiten Seite, die der ersten Seite gegenüberliegt, aufweist.

4. Wagen zum Verstauen eines Fahrrads (35, 36) mit:
- einer Platte (11);
- Führungsorganen zum Schwenken der Platte (11) gegenüber dem Boden, die so ausgestaltet sind, dass der Wagen eine nominale Position einnimmt, wo die Platte liegt, und eine Be-/Entladeposition, wo die Platte aufrecht steht;
- einem Mast (16), der sich quer zu der Platte (11) zwischen einem proximalen Ende (26) und einem distalen Ende (27) erstreckt; und
- einem Haken (17), der an dem distalen Ende (27) des Mastes (16) befestigt ist;
**dadurch gekennzeichnet, dass** der Mast (16) eine Vertiefung (28) in Form einer Rinne begrenzt; wobei sich der Haken (17) von der Seite der Vertiefung (28) des Mastes (16) erstreckt; und der Wagen (10):
- einen Feststeller (18) aufweist mit einer Auflage (30), die entlang einer vorherbestimmten Bahn beweglich ist, in der sich die Auflage an den Mast (16) annähert oder von ihm beabstandet, und mit einem Organ (32), um sich dem Beabstanden der Auflage (30) von dem Mast (16) zu widersetzen; und
- ausgestaltet ist, um ein Fahrrad (35, 36) zwischen dem Mast (16) und dem Feststeller (18) zu halten, wobei in nominaler Position das Fahrrad (35, 36) an dem Haken (17) über sein Vorderrad (37) aufgehängt ist, wobei das Hinterrad (38) und das Vorderrad (37) des Fahrrads (35, 36) in der Vertiefung (28) des Mastes (16) im Eingriff sind und sich die Auflage (30) auf dem Sattel (39) des Fahrrads (35, 36) abstützt.

5. Wagen nach einem der Ansprüche 1 bis 4, **dadurch gekennzeichnet, dass** der Panzer (30) eine Breite aufweist, die größer ist als die Breite eines Sattels (39) des Fahrrads (35, 36).

6. Wagen nach einem der Ansprüche 1 bis 5, **dadurch gekennzeichnet, dass** die Auflage (30) aus einem flexiblen und elastischen Material ist.

7. Wagen nach einem der Ansprüche 1 bis 6, **dadurch gekennzeichnet, dass** der Feststeller (18) so ausgestaltet ist, dass die Auflage (30) eine freigegebene Position einnimmt, in der sie von dem Mast (16) beabstandet ist, und ein Organ (32) aufweist, um die Auflage (30) in der freigegebenen Position verbleiben zu lassen.

8. Wagen nach einem der Ansprüche 1 bis 7, **dadurch gekennzeichnet, dass** das Organ, um sich dem Beabstanden der Auflage (30) von dem Mast (16) zu widersetzen, ein elastisches Organ (32) ist, das die Auflage (30) zur Annäherung an den Mast (16) beaufschlagt.

9. Wagen nach Anspruch 8, **dadurch gekennzeichnet, dass** der Feststeller (18) so ausgestaltet ist, dass das elastische Organ (32) die Auflage (30) zur Annäherung an den Mast (16) zwischen einer dem Mast (16) am nächsten gelegenen Position und einer Zwischenposition beaufschlagt; und dass das elastische Organ (32) die Auflage (30) zur Beabstandung von dem Mast (16) zwischen der Zwischenposition und einer von dem Mast (16) am weitesten entfernten Position beaufschlagt.

10. Wagen nach Anspruch 9, **dadurch gekennzeichnet, dass** das elastische Organ ein Arm (32) variabler Länge ist, der dazu tendiert, eine maximale Länge einzunehmen; der Feststeller (18) einen Rahmen (31), der die Auflage (30) trägt, ein Gelenk zwischen dem Rahmen (31) und der Platte (11), ein Gelenk zwischen einem Ende des Armes (32) variabler Länge und der Platte (11) und ein Gelenk zwischen dem anderen Ende des Armes (32) variabler Länge und dem Rahmen (31) aufweist; und in der Zwischenposition der Auflage (30) diese drei Gelenke fluchten.

11. Wagen nach einem der Ansprüche 1 bis 10, **dadurch gekennzeichnet, dass** der Feststeller (18) einen Rahmen (31) aufweist, der die Auflage (30) trägt, wobei der Rahmen (31) zwei Längsträger (45) aufweist, die jeder an der Platte (11) angelenkt sind.

12. Wagen nach einem der Ansprüche 1 bis 11, **dadurch gekennzeichnet, dass** der Mast (16) eine Bodenwand (51) mit V-förmigem Querschnitt und seitliche Flügel (52) mit geradem Querschnitt aufweist, wobei jeder seitliche Flügel (52) an einem der Enden der Bodenwand (51) entlang geführt ist.

13. Wagen nach einem der Ansprüche 1 bis 12, **dadurch gekennzeichnet, dass** der Haken (17) einen mittigen Kern (53) und Verstärkungen (54), die eine gekrümmte Klaue (56), die den mittigen Kern (53) aufweist, sandwichartig fassen, aufweist, wobei die Verstärkungen (54) über die gekrümmte Klaue (56) auf deren konkaver Seite überstehen.

14. Wagen nach einem der Ansprüche 1 bis 13, **dadurch gekennzeichnet, dass** der Haken (17) gegenüber dem Mast (16) geneigt ist und eine feste Ausrichtung hat.

15. Wagen nach einem der Ansprüche 1 bis 14, **dadurch gekennzeichnet, dass** die Platte (11) von einer massiven Metallplatte gebildet ist.

## Claims

1. Cart for transporting a bicycle (35, 36), comprising:
- a tray (11) having a first main face (20), a second main face (21) and side faces (22-25) each extending between an edge of the first main face (20) and an edge of the second main face (21);
- wheels (13, 15), attached to the tray (11) on the first main face (20) side;
- a pole (16) attached to the tray (11) on the second main face (21) side, extending transversely to the tray (11) between a proximal end (26) and a distal end (27); and
- a hook (17) attached to the distal end (27) of the pole (16),
**characterised in that** the pole (16) delimits a cavity (28) in the form of a trough, the hook (17) extends on the cavity (28) side of the pole (16), and said cart (10):
- comprises a securing means (18) comprising a panel (30) which is movable along a predetermined path in which the panel moves towards or away from the pole (16), and comprising an element (32) for resisting movement of the panel (30) away from the pole (16); and
- is designed to hold a bicycle (35, 36) between the pole (16) and the securing means (18), with the bicycle (35, 36) suspended from the hook (17) by its front wheel (37), the rear wheel (38) and the front wheel (37) of the bicycle (35, 36) being engaged in the cavity (28) of the pole (16) and the panel (30) resting on the saddle (39) of the bicycle (35, 36).

2. Cart according to claim 1, **characterised in that** the proximal end (26) of the pole (16) is adjacent to an edge of the second main face (21) of the tray (11), the cavity (28) of the pole (16) is located on the side away from said edge, the cart (10) is designed to allow a nominal position in which the pole (16) is upright while the tray (11) lies flat with the wheels (13, 15) in contact with the ground, and to allow a loading/unloading position in which the tray (11) is upright while the pole (16) lies flat along the ground with the cavity (28) directed upwards, the transition between the nominal position and the loading/unloading position being carried out by tipping the cart (10).

3. Cart according to either claim 1 or claim 2, **characterised in that** it comprises, in order to be coupled to a similar cart, a drawbar (40) on one side and a hook (60) on a second side away from the first side.

4. Cart for storing a bicycle (35, 36), comprising:
- a tray (11);
- guiding elements for tipping the tray (11) with respect to the ground, designed such that the cart allows a nominal position in which the tray is lying flat and a loading/unloading position in which the tray is upright;
- a pole (16) attached to the tray (11), extending transversely to the tray (11) between a proximal end (26) and a distal end (27); and
- a hook (17) attached to the distal end (27) of the pole (16),
**characterised in that** the pole (16) delimits a cavity (28) in the form of a trough, the hook (17) extends on the cavity (28) side of the pole (16), and said cart (10):
- comprises a securing means (18) comprising a panel (30) which is movable along a predetermined path in which the panel moves towards or away from the pole (16), and comprising an element (32) for resisting movement of the panel (30) away from the pole (16); and
- is designed to hold a bicycle (35, 36) between the pole (16) and the securing means (18), with in the nominal position the bicycle (35, 36) suspended from the hook (17) by its front wheel (37), the rear wheel (38) and the front wheel (37) of the bicycle (35, 36) engaged in the cavity (28) of the pole (16) and the panel (30) resting on the saddle (39) of the bicycle (35, 36).

5. Cart according to any of claims 1 to 4, **characterised in that** the panel (30) has a width greater than the width of a saddle (39) of a bicycle (35, 36).

6. Cart according to any of claims 1 to 5, **characterised in that** the panel (30) is made of a flexible and resilient material.

7. Cart according to any of claims 1 to 6, **characterised in that** the securing means (18) is designed such that the panel (30) allows a disengaged position in which it is spaced apart from the pole (16) and comprises an element (32) for making the panel (30) stay in the disengaged position.

8. Cart according to any of claims 1 to 7, **characterised in that** the element for resisting movement of the panel (30) away from the pole (16) is a resilient element (32) which biases the panel (30) to move towards the pole (16).

9. Cart according to claim 8, **characterised in that** the securing means (18) is designed such that the resilient element (32) biases the panel (30) to move towards the pole (16) between a position closest to the pole (16) and an intermediate position, and such that the resilient element biases the panel (30) to move away from the pole (16) between the intermediate position and a position furthest away from the pole (16).

10. Cart according to claim 9, **characterised in that** the resilient element is a variable-length arm (32) that is prone to take a maximum length, the securing means (18) comprises a frame (31) bearing the panel (30), a hinge between the frame (31) and the tray (11), a hinge between one end of the variable-length arm (32) and the tray (11), and a hinge between the other end of the variable-length arm (32) and the frame (31), and said three hinges are aligned in the intermediate position of the panel (30).

11. Cart according to any of claims 1 to 10, **characterised in that** the securing means (18) comprises a frame (31) bearing the panel (30) and said frame (31) comprises two side-members (45), each hinged to the tray (11).

12. Cart according to any of claims 1 to 11, **characterised in that** said pole (16) comprises a base wall (51) having a V-shaped cross section and side walls (52) having a straight cross section, each side wing (52) running along one of the ends of the base wall (51).

13. Cart according to any of claims 1 to 12, **characterised in that** said hook (17) comprises a central web (53) and fittings (54) sandwiching a curved tab (56) which the central web (53) comprises, the fittings (54) projecting from the curved tab (56) on the concave side thereof.

14. Cart according to any of claims 1 to 13, **characterised in that** said hook (17) is inclined relative to the pole (16) and has a fixed orientation.

15. Cart according to any of claims 1 to 14, **characterised in that** said tray (11) is formed by a solid metal plate.
